# EUROPÄISCHE PATENTSCHRIFT

(11) **EP 2 307 593 B1**
(45) Veröffentlichungstag und Bekanntmachung des Hinweises auf die Patenterteilung: **27.02.2013**
(21) Anmeldenummer: 09757273.9
(22) Anmeldetag: 03.06.2009
(51) Int. Cl.: C25D 7/00, C25D 3/56, C25D 5/56, B32B 15/08

(54) **VERBUNDWERKSTOFF**
COMPOSITE MATERIAL
MATÉRIAU COMPOSITE

(30) Priorität: 05.06.2008 DE 102008026952
(43) Veröffentlichungstag der Anmeldung: 13.04.2011
(73) Patentinhaber: Grohe AG, 58675 Hemer (DE); Galvanoform Gesellschaft für Galvanoplastik mbH, 77933 Lahr (DE)
(72) Erfinder: VETTER, Georg, 77948 Friesenheim (DE); JÄGER, Ralf, 77966 Kappel-Grafenhausen (DE); SCHIEL, Matthias, 77972 Mahlberg (DE); KÖBLER, Jürgen, 77948 Friesenheim (DE); OBERGFÖLL, Jürgen, 77933 Lahr (DE); TWER, Udo, 77933 Lahr (DE)
(86) Internationale Anmeldenummer: PCT/EP2009/003937
(87) Internationale Veröffentlichungsnummer: WO 2009/146890

(56) Entgegenhaltungen:
- US-A- 4 191 617
- US-A- 4 400 442
- US-B1- 6 235 408
- US-B1- 6 372 118
- YAMAMOTO MASOAKI, SHIMAZAKI YUTAKA, SATO TOSHIKAZU: "High Speed Nickel-Cobalt Alloy Electroforming by High Current Density with Flowing Electrolytes" MEMOIRS OF THE FACULTY OF ENGINEERING, HOKKAIDO UNIVERSITY, Bd. 14, Nr. 3, Dezember 1976 (1976-12), Seiten 45-54, XP002565892
- BRANDES ET AL: "Advances in methods for plating on plastics tout advantages over conventional technologies" METAL FINISHING, ELSEVIER, NEW YORK, NY, US, Bd. 105, Nr. 3, 1. März 2007 (2007-03-01), Seiten 35-40, XP025982293 ISSN: 0026-0576 [gefunden am 2007-03-01]

## Beschreibung

Die Erfindung betrifft einen Verbundwerkstoff gemäß dem Oberbegriff des Patentanspruchs 1.

Verbundkonstruktionen aus unterschiedlichen Materialien, die einseitig oder beidseitig mit Metallplatten verbunden sind, werden unter anderem im Flugzeugbau zur Reduzierung des Gewichtes verwendet. Derartige Konstruktionen sind auch unter der Bezeichnung "HSS-GLAIRE" bekannt. Hierbei werden glasfaserverstärkte Kunststoffschichten mit Aluminiumplatten unter Druck verklebt. Im Vergleich zu Vollmetallplatten lassen sich durch derartige Verbundkonstruktionen bestimmte physikalische Eigenschaften, wie insbesondere die Formstabilität, wesentlich verbessern. Unter anderem werden zur Bestimmung der Stabilitätseigenschaften die Biege- und Zugfestigkeitsparameter der Verbundkonstruktionen gemessen. Nachteilig an derartigen Verbundkonstruktionen ist jedoch, dass sich die Konstruktionen trotz der besonders formstabilen Ausführung für Hohlkörperformen, wie Rohre oder auch Formteile, die eine Vielzahl von unterschiedlich zueinander ausgebildeten Oberflächen aufweisen, wie beispielsweise der Kühlergrill eines Autos, nicht eignen.

Weiterhin sind aus dem Bereich der Fahrzeugtechnik oder auch Sanitärtechnik Formteile aus Verbundwerkstoffen bekannt. Die Verbundwerkstoffe, die einen mehrschichtigen Aufbau aufweisen, werden vorzugsweise dann verwendet, wenn keine erhöhten Anforderungen an die Formstabilität zu erfüllen sind. Im Allgemeinen bestehen derartige Verbundwerkstoffe aus einer relativ dicken Tragschicht aus Kunststoff, beispielsweise ABS (Acrylnitril-Butadien-Styrol). Hierauf werden zumeist mit nasschemischen insbesondere galvanischen Verfahren eine oder mehrere dünne Metallschichten aufgebracht. Als bevorzugtes galvanisches Verfahren wird das so genannte Futuron-Verfahren eingesetzt, mittels dessen sich eine Direktmetallisierung von Kunststoffen erzielen lässt. Nach dem Anätzen der Oberfläche wird nach dem Aufbringen einer dünnen Kupferschicht, die beispielsweise im Bereich von 20 µm liegt, eine dünne Nickelschicht im Bereich von 12 µm und anschließend eine sehr dünne Oberflächenchromschicht mit einer Schichtdicke von unter 1 µm abgeschieden.

Aus der US 4 191 617 A ist ein Verfahren zur direkten Galvanisierung von Kunststoffen mit einer ultra dünnen Schicht von maximal 1,25 µm aus einer Nickel-Kobalt-Legierung bekannt. Die Nickel-Kobalt-Schicht dient hier als Ausgangsschicht für weitere metallische Schichten.

Aus der US 6 372 118 82 ist ein Verfahren zur Herstellung von galvanischen Oberflächen mit Vickershärten von annähernd 1000 Hv100 offenbart. Hierbei kommen Nickel-Eisen-Kobalt-Elektrolyten zum Einsatz, mit den Schichtdicken bis 72 µm und größere Härten als bei Nickel-Kobalt-Elektrolyten erzielt werden können.

Aus der US 6 235 408 ist die Verwendung von Kunststoffen bekannt, auf die eine Metallbeschichtung, vorzugsweise aus Kupfer, Chromeisen oder Nickel aufgebracht wird.

Auch die US 7 354 354 B2 offenbart leichtgewichtige Bauteile aus einem Verbundwerkstoff mit einer Kunststoffschicht und einer feinkörnigen Metallschicht, die in nanokristalliner Form auf die Kunststoffschicht aufgebracht wird.

Nachteilig an den bisherigen Verbundwerkstoffen ist, dass zwar mit galvanotechnlschen Verfahren hergestellte Verbundwerkstoffe vielfältige insbesondere auch ausgefallene Formen herstellbar sind, diese jedoch nur geringe Anforderungen an die Stabilität erFüllen. Beispielsweise werden im Sanitärbereich druckwasserbelastete Teile, die erhöhte Anforderungen an die Stabilität erfüllen müssen, bisher vollständig aus Metall gefertigt. Hierzu zählen unter anderem Rohre und Haltestangen oder Teile im Bereich für die gewerbliche Anwendung, wie Duschköpfe oder Duschstangen. Bei Teilen aus Vollmetall werden neben den immer weiter steigenden Materialkosten zusätzlich kostenintensive Bearbeitungsschritte notwendig, um die entsprechende technische Funktionalität zu gewährleisten. Auch die steigenden Anforderungen, bedingt durch ausgefallene Designwünsche, erfordern im Allgemeinen zusätzliche Bearbeitungsschritte, um die gewünschten Formschöpfungen realisieren zu können. Hierdurch werden die Herstellungskosten erhöht. Ferner werden sowohl bei einer Vollmetallausführung als auch bei den bisher bekannten Verbundwerkstoffen oberflächenveredelnde Schritte wie eine Chromierung durchgeführt, um die Anforderungen an die Haptik und die optischen Eigenschaften wie Glanz der Oberflächen erfüllen zu können.

Der Erfindung liegt die Aufgabe zugrunde, formstabile Verbundwerkstoffe kostengünstig herzustellen.

Die Aufgabe wird durch einen Verbundwerkstoff mit den Merkmalen des Patentanspruchs 1 gelöst. Vorteilhafte Weiterbildungen sind Gegenstand von Unteransprüchen.

Gemäß einem Gegenstand der vorliegenden Erfindung wird ein Verbundwerkstoff bereitgestellt mit einer ersten als Tragschicht ausgebildeten Kunststoffschicht und einer zweiten wenigstens teilweise auf der Tragschicht ausgebildeten metallischen Schicht, wobei die Tragschicht eine größere Schichtdicke als die aufliegende Schicht aufweist. Die metallische Schicht ist aus einer Hartnickelschicht bestehend aus einer Verbindung aus Nickel (Ni) und Kobalt (Co) vorgesehen. Vorteilhafterweise weist die Hartnickelschicht eine Zugfestigkeit von wenigstens 1600 N/mm² auf. Untersuchungen der Anmelderin haben gezeigt, dass demgemäß die metallische Schicht eine vielfache Erhöhung der Formstabilität und der Korrosionsresistenz des Verbundwerkstoffes bewirkt. Weiterhin wird durch die metallische Schicht die Zug- und Biegefestigkeit des Verbundwerkstoffes gegenüber der Biege- und Zugfestigkeit der Tragschicht wenigstens um den Faktor 3 erhöht.

Es wird außerdem ein Verfahren zur Herstellung eines Verbundwerkstoffes bereitgestellt, bei welchem in einem ersten Schritt eine erste als Tragschicht ausgebildete Kunststoffschicht hergestellt und in einem weiteren Schritt eine metallische Schicht, eine Legierung aus Nickel und Kobalt, mittels eines Elektrolyten, vorzugsweise eines Nickelelektrolyten vom Watts Typ, in einem elektrochemischen Verfahrensschritt aufgebracht wird. Gemäß einer Ausgestaltung der Erfindung wird die metallische Schicht des Verbundwerkstoffs auf elektrolytischem Weg aus einem modifizierten Watts'schen Nickelelektrolyten abgeschieden. Bei diesem ist das Legierungselement Kobalt in Form eines Sulfates zugegeben.

Weiterhin enthält der Elektrolyt ein Leitsalz zur Verbesserung der Anodenlöslichkeit in Form einer Chloridverbindung und Borsäure als Puffersubstanz, mit der der pH-Wert des Elektrolyten in einem bestimmten Bereich gehalten werden kann.

Der Elektrolyt kann Zusätze an organischen Verbindungen, beispielsweise einem Tensid, und Glanzträger, beispielsweise Saccharin oder Butendiol, aufweisen.

Vorteilhafterweise enthält der Elektrolyt eine Konzentrationen von 20 - 50 g/l Nickel, 0,5 - 4 g/l Kobalt, 60 - 150 g/l Chlorid, 25 - 45 g/l Borsäure, 0,5 - 5 ml/l Tensiden und 0,1 - 2 g/l Glanzträgern.

Eine Weiterbildung des Verfahrens sieht vor, dass die elektrolytische Abscheidung bei einer Stromdichte in einem Bereich von wenigstens 0,1 bis maximal 4 A/dm² erfolgt. Von Vorteil ist außerdem, wenn die elektrolytische Abscheidung bei einem pH-Wert In einem Bereich von 2,5 bis 4 und bei einer Temperatur in einem Bereich von 35 bis 45 °C erfolgt.

Um Abscheidegeschwindigkeiten von 0,2 bis 1 µm pro Minute zu erreichen ist es außerdem von Vorteil, wenn das zu beschichtende Bauteil und / oder der Elektrolyt bewegt werden, so dass es zu einem Konzentrationsausgleich im Elektrolyten kommen kann.

Während des Abscheidevorganges wird der Elektrolyt analytisch überwacht, um die Konzentration der anorganischen und organischen Komponenten sicher zu stellen.

Die bevorzugte Dicke der metallischen Schicht liegt unterhalb einem Millimeter. Erfindungsgemäß beträgt die Dicke der Festigkeitserhöhenden metallischen Schicht mindestens 50 µm. Vorteilhaft ist es, wenn vor dem Aufbringen der Hartnickelschicht eine erste Schicht aus Kupfer, vorzugswelse mittels eines galvanischen Verfahrensschrittes, aufgebracht wird und hierbei die Dicke der Kupferschicht eine im Vergleich zu der Dicke der Hartnickelschicht wesentlich dünnere Dicke aufweist. Untersuchungen der Anmelderin haben gezeigt, dass sich hierdurch die Hartnickelschicht besonders schnell und gleichmäßig aufbringen lässt. Die Dicke der Tragschicht 1 liegt vorzugsweise im Bereich von einigen Millimetern, die Dicke der leitfähigen Schicht 2 liegt vorzugsweise im Bereich von 1 µm bis 100 µm, höchst vorzugsweise zwischen 5 µm bis 30 µm und die Dicke der Hartnickelschicht 3 liegt vorzugsweise im Bereich von 50 µm bis 2000 µm, höchst vorzugsweise im Bereich zwischen 100 µm und 400 µm.

Untersuchungen der Anmelderin haben dabei gezeigt, dass bei einer Schichtdicke einer metallischen Schicht von größer 100 µm die Haptik des Verbundwerkstoffs gegenüber einem lediglich obernächenbeschichteten Kunststoffbauteils derart verändert wird, dass ein Unterschied zu einem vollmetallischen Körper sehr gering und kaum spürbar ist.

Weiterhin wird mit der Erfindung ein Verbundwerkstoff bereitgestellt, dessen Tragschicht leitfähige Eigenschaften aufweist, indem der Kunststoff elektrisch leitfähige Partikel enthält oder auf dessen Tragschicht als Zwischenschicht zwischen Tragschicht und metallischer Schicht eine leitfähige Schicht angeordnet ist. Diese leitfähige Schicht kann ebenfalls eine metallische Schicht aus Ag, Ni oder Cu oder einer Kombination von zwei dieser Elemente oder aller dieser Elemente sein. Weiterhin ist auch eine leitfähige Schicht aus einer leitfähigen Farbe oder einem leitfähigen Lack möglich.

Um besondere Anforderungen an die Oberflächeneigenschaften wie Glanz und Haptik zu erfüllen ist es vorteilhaft, eine Deckschicht aufzubringen, die vorzugsweise als Chromschicht ausgeführt wird. Gemäß einer anderen Weiterbildung wird die Chromschicht in einem weiteren galvanischen Verfahrensschritt als Oberflächenschicht aufgebracht, wobei die Dicke der Chromschicht unterhalb der Dicke der metallischen, Festigkeitserhöhenden Schicht liegt.

Ein Vorteil der Erfindung ist, dass eine relativ zur Dicke der Tragschicht geringe Dicke der metallischen Schicht ausreichend ist, um die Stabilität der Tragschicht und damit des Verbundwerkstoffes um ein Vielfaches zu erhöhen. Hierdurch lassen sich bei dem Verbundwerkstoff metallähnliche Biege- und Zugfestigkeitswerte erzielen. Indem die Formgebung des Verbundwerkstoffes bereits durch die Form der Tragschicht weitgehend bestimmt wird, lassen sich eine Vielzahl von Formen, Produkten und auch aufwendige Oberflächenformen einfach und kostengünstig durch Einsatz herkömmlicher Produktionsverfahren der Kunststofftechnik, wie Spritzguss- oder Extrusionsverfahren, herstellen. Kostenintensive Metall bearbeitende Herstellungsschritte entfallen größtenteils.

Untersuchungen der Anmelderin haben gezeigt, dass sich der erfindungsgemäße Verbundwerkstoff besonders vorteilhaft zur Herstellung von Sanitärteilen verwenden lässt, die unter anderem auch Druckwasser belastet sind und bisher aus Gründen der zu geringen Formstabilität aus einem metallischen Werkstoff wie beispielsweise Kupfer oder Messing hergestellt werden. Im Unterschied zu den bisherigen nicht formstabilen Verbundwerkstoffen wird nun ein so genannter Balloneffekt, d.h. das Vergrößern der Oberfläche bei einer Erhöhung des Innendrucks zuverlässig unterdrückt. Demgemäß lassen sich beispielsweise Deckenbrausen, die beim Einsatz im gewerblichen Bereich hohen Beanspruchungen ausgesetzt sind, metallsparend und kostengünstig herstellen.

Je nach Einsatzbereich und Ausformung der Anschlussstücke, wie beispielsweise bei mehrstückigen Konstruktionen, beträgt die Dicke der Kunststoffschicht zwischen einem Millimeter und einigen Zentimetern. Vorteilhafte Kunststoffmaterialien für die Ausbildung der Tragschicht sind beispielsweise ABS (Acrylnitril-Butadien-Styrol), PA (Polyamid), PE (Polyethylen), PP (Polypropylen), PET (Polyethylenterephthalat), PVC (Polyvinylchlorid). Des Weiteren lassen sich neben Armaturenkörpern für die Chassisbauweise aus dem Verbundwerkstoff auch hochstabile Rohre und Stangen fertigen.

### Ausführungsbeispiele

### Vergleichsbeispiel 1

Auf einen durch Spritzgießen und ohne weitere Nachbearbeitung hergestellten Probekörper aus ABS wurde mittels Futuron-Verfahren eine leitfähige hochglänzende Kupferschicht von 31 µm aufgebracht. Darauf wurde mittels eines galvanotechnischen Prozesses eine 41 µm Hartstoffschicht aus einer Nickel-Kobalt-Legierung aufgebracht. Die Abscheidungsrate lag bei 25 - 50 µm /h. Möglich sind bis zu 1mm/h. Anschließend wurde die Hartstoffschicht mit einer 0,2 µm dicken Chromschicht überdeckt.

An einem unbeschichteten Probekörper aus ABS und dem beschichteten Probekörper wurde ein Zugversuch nach DIN ISO 527 und ein Biegeversuch nach DIN EN ISO 178 durchgeführt.

Die Zugfestigkeit des unbeschichteten ABS-Probekörpers betrug 40 N/mm², die Zugfestigkeit des beschichteten Probekörpers betrug 120 N/mm².

Die Biegefestigkeit des unbeschichteten ABS-Probekörpers betrug 63 N/mm², die Biegefestigkeit des beschichteten Probekörpers betrug 278 N/mm².

### Beispiel 2

Auf einen durch Spritzgießen und ohne weitere Nachbearbeitung hergestellten Probekörper aus ABS wurde mittels Futuron-Verfahren eine leitfähige hochglänzende Kupferschicht von 18 µm aufgebracht. Darauf wurde mittels eines galvanotechnischen Prozesses eine 179 µm dicke Hartstoffschicht aus einer Nickel-Kobalt-Legierung aufgebracht. Die Abscheidungsrate lag bei 25 - 50 µm /h. Möglich sind bis zu 1mm/h. Anschließend wurde die Hartstoffschicht mit einer 0,2 µm dicken Chromschicht überdeckt.

An einem unbeschichteten Probekörper aus ABS und dem beschichteten Probekörper wurde ein Zugversuch nach DIN ISO 527 und ein Biegeversuch nach DIN EN ISO 178 durchgeführt.

Die Zugfestigkeit des unbeschichteten ABS-Probekörpers betrug 40 N/mm², die Zugfestigkeit des beschichteten Probekörpers betrug 257 N/mm².

Die Biegefestigkeit des unbeschichteten ABS-Probekörpers betrug 63 N/mm², die Biegefestigkeit des beschichteten Probekörpers betrug 723 N/mm².

### Beispiel 3

Auf einen durch Spritzgießen und ohne weitere Nachbearbeitung hergestellten Probekörper aus ABS wurde mittels Futuron-Verfahren eine leitfähige hochglänzende Kupferschicht von 36 µm aufgebracht. Darauf wurde mittels eines galvanotechnischen Prozesses eine 228 µm dicke Hartstoffschicht aus einer Nickel-Kobalt-Legierung aufgebracht. Die Abscheidungsrate lag bei 25 - 50 µm /h. Möglich sind bis zu 1mm/h. Anschließend wurde die Hartstoffschicht mit einer 0,2 µm dicken Chromschicht überdeckt.

An einem unbeschichteten Probekörper aus ABS und dem beschichteten Probekörper wurde ein Zugversuch nach DIN ISO 527 und ein Biegeversuch nach DIN EN ISO 178 durchgeführt.

Die Zugfestigkeit des unbeschichteten ABS-Probekörpers betrug 40 N/mm², die Zugfestigkeit des beschichteten Probekörpers betrug 396 N/mm².

Die Biegefestigkeit des unbeschichteten ABS-Probekörpers betrug 63 N/mm², die Biegefestigkeit des beschichteten Probekörpers betrug 1108 N/mm².

### Beispiel 4

Auf einen durch Spritzgießen und ohne weitere Nachbearbeitung hergestellten Probekörper aus ABS wurde mittels Futuron-Verfahren eine leitfähige hochglänzende Kupferschicht von 40 µm aufgebracht. Darauf wurde mittels eines galvanotechnischen Prozesses eine 341 µm dicke Hartstoffschicht aus einer Nickel-Kobalt-Legierung aufgebracht. Die Abscheidungsrate lag bei 25 - 50 µm /h. Möglich sind bis zu 1mm/h. Anschließend wurde die Hartstoffschicht mit einer 0,2 µm dicken Chromschicht überdeckt.

An einem unbeschichteten Probekörper aus ABS und dem beschichteten Probekörper wurde ein Zugversuch nach DIN ISO 527 und ein Biegeversuch nach DIN EN ISO 178 durchgeführt.

Die Zugfestigkeit des unbeschichteten ABS-Probekörpers betrug 40 N/mm², die Zugfestigkeit des beschichteten Probekörpers betrug 461 N/mm².

Die Biegefestigkeit des unbeschichteten ABS-Probekörpers betrug 63 N/mm², die Biegefestigkeit des beschichteten Probekörpers betrug 1517 N/mm².

Weitere Ausführungsbeispiele der Erfindung sind in der Zeichnung dargestellt und werden im Folgenden näher beschrieben. In den Zeichnungsunterlagen bezeichnen gleiche Bezugszeichen gleiche Funktionsteile. Es zeigt in der Zeichnung die
- Figur 1a: einen Querschnitt durch den Schichtaufbau des erfindungsgemäßen Verbundwerkstoffes mit beidseitiger Schichtabfolge;
- Figur 1b: einen Querschnitt durch den Schichtaufbau des erfindungsgemäßen Verbundwerkstoffes mit einseitiger Schichtabfolge;
- Figur 2: einen Querschnitt des Verbundwerkstoffes in einer rohrförmlgen Ausführung;
- Figur 3: eine Ansicht eines Brausekopf gemäß des Schichtaufbaus der Figur 1b.

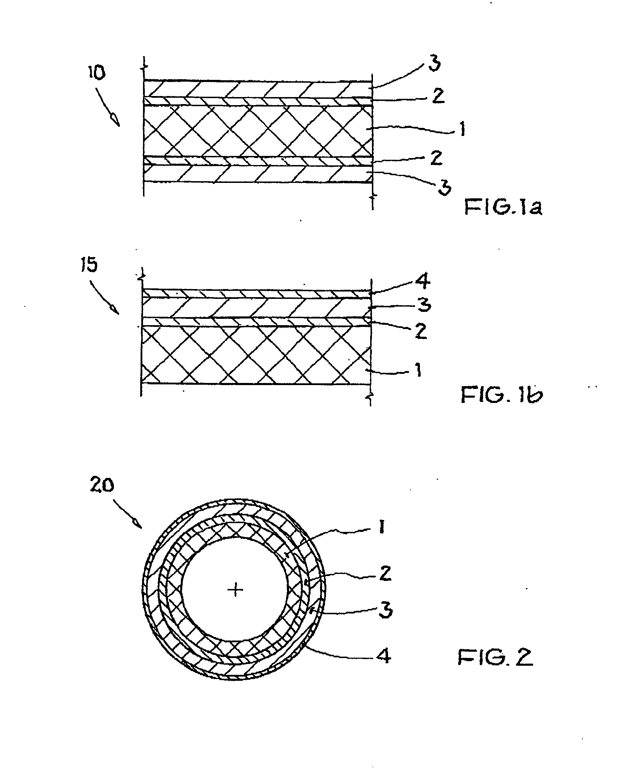

Der in Figur 1a dargestellte Querschnitt eines Verbundwerkstoff 10 weist eine erste Schicht 1 aus Kunststoff, die insbesondere auch einen Zusatz aus Kohlefasern oder Glasfasern aufweisen kann, mit einer auf beiden Seiten aufliegenden zweiten dünnen leitfähigen vorzugsweise aus Metall ausgebildeten zweiten Schicht 2, und eine auf der zweiten Schicht 2 aufliegenden Hartnickelschicht 3. Die Dicke der ersten Schicht 1 liegt vorzugsweise im Bereich von einigen Millimetern, die Dicke der zweiten Schicht 2 liegt vorzugsweise im Bereich von 1µm bis 100 µm, höchst vorzugsweise zwischen 5 µm bis 30 µm und die Dicke der Hartnickelschicht 3 liegt vorzugsweise im Bereich von 50 µm bis 800 µm, höchst vorzugsweise im Bereich zwischen 100 µm und 400 µm.

In der Figur 1b ist im Unterschied zu der Ausführung dargestellt in der Figur 1a nur eine einseitige Beschichtung des Verbundwerkstoffes 15 vorgesehen. Hierzu wird bei einer Herstellung mittels eines nasschemischen Verfahrens die Unterseite des Verbundwerkstoffes 15 maskiert, um ein Schichtwachstum zu unterdrücken. In einer Weiterbildung ist auf die Hartnickelschicht 3 eine vierte metallische Schicht 4, vorzugsweise aus Chrom, vorgesehen, deren Dicke vorzugsweise im Bereich von unter 1 µm bis wenigen µm liegt.

Untersuchungen der Anmelderin haben gezeigt, dass sich der erfindungsgemäße Schichtaufbau durch unterschiedliche Herstellverfahren, wie Aufdampfen, Abscheiden aus der Gasphase mit oder ohne einer anschließenden Temperaturbehandlung und nasschemischen Verfahren oder einer Kombination von vorgenannten Verfahren erzeugen lässt. Höchst vorzugsweise lassen sich zur Erzeugung des Verbundwerkstoffes galvanische Verfahren einsetzen, wie beispielsweise eine Weiterbildung des eingangs erwähnten Futuron-Verfahrens. Bei der Herstellung des Verbundwerkstoffes mittels galvanischer Verfahrensschritte wird in einem ersten Verfahrensschritt die zweite Schicht aus Kupfer als Startschicht für ein gleichmäßiges schnelles Aufbringen der dritten Schicht aus einer metallischen Hartschicht, vorzugsweise eine Hartnickelschicht, abgeschieden. Nach dem Abscheiden der dritten Schicht in einem zweiten galvanischen Verfahrensschritt wird, sofern es die Anforderungen an die Oberflächenbeschaffenheit erfordert, die vierte Schicht, die vorzugsweise als eine Chromschicht ausgebildet ist, in einem dritten galvanischen Verfahrensschritt abgeschieden. Sofern nur eine Oberflächenseite der Tragschicht beschichtet wird, lässt sich die andere Seite beispielsweise mit einer Polymerverbindung maskieren, um ein Schichtwachstum zu unterdrücken.

In der Figur 2 ist ein Querschnitt eines Rohres 20 bestehend aus dem Verbundwerkstoff dargestellt. Hierbei ist der Schichtaufbau nur an der äußeren Oberfläche des Rohres 20 ausgebildet. Untersuchungen der Anmelderin haben gezeigt, dass durch den Schichtaufbau an der äußeren Oberfläche eine hinreichende Erhöhung der Formstabilität, d.h. der Blege- und Zugfestigkeit erzielen lässt. Derartige Rohre lassen sich beispielsweise im Sanitärbereich auch als Duschstangen oder Haltestangen verwenden. Des Weiteren lassen sich druckwasserbelastete Teile fertigen.

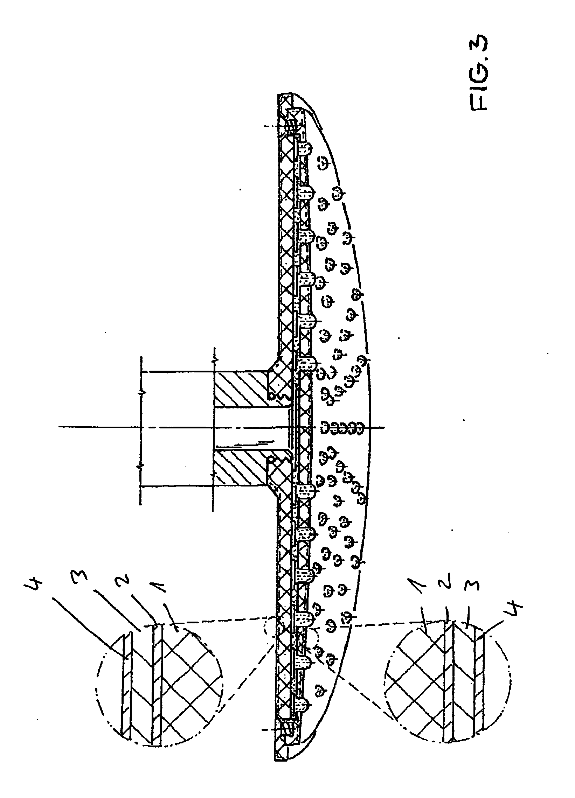

Die Figur 3 zeigt einen Duschkopf 30 vollständig ausgebildet aus dem Verbundwerkstoff gemäß den Zeichnungsunterlagen der Figur 1b. In diesem Anwendungsfall ist es hinreichend, die Schichten 2, 3, und 4 auf der äußeren sichtbaren Oberfläche auszubilden. Derartige Duschköpfe werden bei fest montierten Deckenduschen im gewerblichen Bereich verwendet.

### Bezugszeichenliste

- 1: erste Schicht, Tragschicht
- 2: leitfähige Schicht
- 3: metallische Schicht, Hartnickelschicht
- 4: Deckschicht, Chromschicht
- 10: Verbundwerkstoff mit zweiseitiger Schichtabfolge
- 15: Verbundwerkstoff mit einseitiger Schichtabfolge
- 20: Rohr mit außenliegender Schichtabfolge
- 30: Duschkopf

## Patentansprüche

1. Verbundwerkstoff (10) mit
einer als Tragschicht (1) ausgebildeten Kunststoffschicht und
einer wenigstens teilweise auf der Tragschicht (1) ausgebildeten Hartnickelschicht (3), die die Zug- und Biegefestigkeit des Verbundwerkstoffes (10) gegenüber der Zug- und Biegefestigkeit der Tragschicht (1) wenigstens um den Faktor 3 erhöht,
wobei die Tragschicht (1) eine größere Schichtdicke als die aufliegenden metallische Schicht (3) aufweist,
die aus einer Nickel-Kobalt-Legierung besteht und eine Schichtdicke von mindestens 50µm aufweist.

2. Verbundwerkstoff nach Anspruch 1, **dadurch gekennzeichnet, dass** die metallische Schicht mittels eines galvanischen Verfahrens aufgebracht wird.

3. Verbundwerkstoff nach Anspruch 2, **dadurch gekennzeichnet, dass** die metallische Schicht auf elektrolytischem Weg aus einem modifizierten Watts'schen Nickelelektrolyten abgeschieden wird.

4. Verbundwerkstoff nach Anspruch 3, **dadurch gekennzeichnet, dass** dem Watts'schen Nickelelektrolyten als Legierungselement Kobalt in Form eines Sulfates zugegeben wird.

5. Verbundwerkstoff nach einem der Ansprüche 1 bis 4, **dadurch gekennzeichnet, dass** die Tragschicht leitfähige Eigenschaften aufweist oder zwischen Tragschicht und metallischer Schicht (3) eine leitfähige Schicht (2) angeordnet ist.

6. Verbundwerkstoff nach einem der Ansprüche 1 bis 5, **dadurch gekennzeichnet, dass** eine Deckschicht (4) vorgesehen ist, die die metallische Schicht (3) wenigstens teilweise überdeckt.

7. Verbundwerkstoff nach Anspruch 6, **dadurch gekennzeichnet, dass** die Deckschicht (4) als Chromschicht ausgebildet ist.

8. Verwendung eines Verbundwerkstoffes (10) nach einem der Ansprüche 1 bis 7 zur Herstellung von Sanitärteilen.

9. Verwendung nach Anspruch 8, **dadurch gekennzeichnet, dass** die Sanitärteile wasserdruckbelastete Teile (30) umfassen.

## Claims

1. Composite material (10) having
a plastics layer formed as a carrier layer (1) and
a hard nickel layer (3) which is formed on at least part of the carrier layer (1) and which increases the tensile and flexural strength of the composite material (10) by a factor of at least 3 relative to the tensile and flexural strength of the carrier layer (1),
the carrier layer (1) having a greater layer thickness than the overlying metal layer (3),
which consists of a nickel/cobalt alloy and has a layer thickness of at least 50 µm.

2. Composite material according to claim 1, **characterised in that** the metal layer is applied by means of a galvanic process.

3. Composite material according to claim 2, **characterised in that** the metal layer is deposited electrolytically from a modified Watts' nickel electrolyte.

4. Composite material according to claim 3, **characterised in that** cobalt in the form of a sulphate is added to the Watts' nickel electrolyte as alloying element.

5. Composite material according to any one of claims 1 to 4, **characterised in that** the carrier layer has conductive properties or a conductive layer (2) is arranged between the carrier layer and the metal layer (3).

6. Composite material according to any one of claims 1 to 5, **characterised in that** a cover layer (4) is provided which covers at least part of the metal layer (3).

7. Composite material according to claim 6, **characterised in that** the cover layer (4) is in the form of a chromium layer.

8. Use of a composite material (10) according to any one of claims 1 to 7 in the manufacture of sanitary fittings.

9. Use according to claim 8, **characterised in that** the sanitary fittings comprise fittings (30) that are subject to water pressure.

## Revendications

1. Matériau composite (10) comportant :
une couche de matériau synthétique réalisée sous la forme d'une couche support (1) et une couche de nickel dur (3) réalisée au moins en partie sur la couche support (1) et qui augmente la résistance à la traction et à la flexion du matériau composite (10) par rapport à la résistance à la traction et à la flexion de la couche support (1) au moins d'un facteur 3, la couche support (1) présentant une épaisseur supérieure à celle de la couche métallique (3) appliquée sur celle-ci qui est constituée d'un alliage nickel-cobalt et présente une épaisseur d'au moins 50 µm.

2. Matériau composite conforme à la revendication 1,
**caractérisé en ce que**
la couche métallique est appliquée au moyen d'un procédé de galvanisation.

3. Matériau composite conforme à la revendication 2,
**caractérisé en ce que**
la couche métallique est appliquée par voie électrolytique à partir d'un électrolyte de nickelage de Watts modifié.

4. Matériau composite conforme à la revendication 3,
**caractérisé en ce que**
le cobalt sous la forme d'un sulfate est ajouté à l'électrolyte de nickelage de Watts en tant qu'élément d'alliage.

5. Matériau composite conforme à l'une des revendications 1 à 4,
**caractérisé en ce que**
la couche support présente des caractéristiques de conduction ou une couche conductrice (2) est appliquée entre la couche support et la couche métallique (3).

6. Matériau composite conforme à l'une des revendications 1 à 5,
**caractérisé en ce qu'**
il est prévu une couche de recouvrement (4) qui recouvre au moins partiellement la couche métallique (3).

7. Matériau composite conforme à la revendication 6,
**caractérisé en ce que**
la couche de recouvrement (4) est réalisée sous la forme d'une couche de chrome.

8. Utilisation d'un matériau composite (10) conforme à l'une des revendications 1 à 7 pour la fabrication d'éléments sanitaires.

9. Utilisation conforme à la revendication 8,
**caractérisé en ce que**
les éléments sanitaires renferment des parties (30) chargées par la pression de l'eau.
